# EUROPEAN PATENT SPECIFICATION

(11) **EP 0 414 604 B1**
(45) Date of publication and mention of the grant of the patent: **03.07.2002**
(21) Application number: 90402325.6
(22) Date of filing: 21.08.1990
(51) Int. Cl.: G06K 7/08, G07F 7/10

(54) **Magnetic stripe reading apparatus for passbook**
Magnetstreifen-Lesegerät für ein Bankbuch
Lecteur de prise magnétique pour livret de banque

(30) Priority: 23.08.1989 JP 21631589
(43) Date of publication of application: 27.02.1991
(73) Proprietor: FUJITSU LIMITED, Kawasaki-shi, Kanagawa 211 (JP)
(72) Inventor: Gotoh, Toru, Kawasaki-shi, Kanagawa 215 (JP)
(74) Representative: Joly, Jean-Jacques

(56) References cited:
- US-A- 3 803 388
- US-A- 4 082 943
- PATENT ABSTRACTS OF JAPAN, vol. 7, no. 51 (P-179)[1196], 26th February 1983; & JP-A-57 199 079 (HITACHI SEISAKUSHO K.K.) 06-12-1982

## Description

### BACKGROUND OF THE INVENTION

### Field of the Invention

The present invention relates to a magnetic stripe reader for a passbook, more particularly to a magnetic stripe reader built in a passbook printer of an automatic teller machine (called ATM hereafter) used in banking facilities.

An ATM reads such data as a code of a bank branch, customer's account number and balance which are recorded on a magnetic stripe (called MS hereafter), performs transaction processing and prints the details of transaction on the passbook. For this purpose, a passbook printer which is equipped with a MS reader and prints transaction data on a passbook is being used in an ATM in recent years.

Generally, passbooks are different in size and the position where an MS is attached, from one banking facility to another. The magnetic heads for reading the MS are provided on different positions according to the passbook size which differ depending on the banking facilities. Therefore, the ATM of a certain banking facility is not available for passbooks of other facilities. Today, some facilities use two (old and new) types of passbooks which are different in size. In this case, MSs are attached at different positions according to the type so that the MSs can be positioned under the magnetic head based on the passbook size. However, this method cannot be applied to the passbooks of the same size and with MSs attached at different positions. Therefore, a passbook printer equipped with magnetic reader that can deal with different passbooks of different banking facilities has been required.

### Description of the Related Art

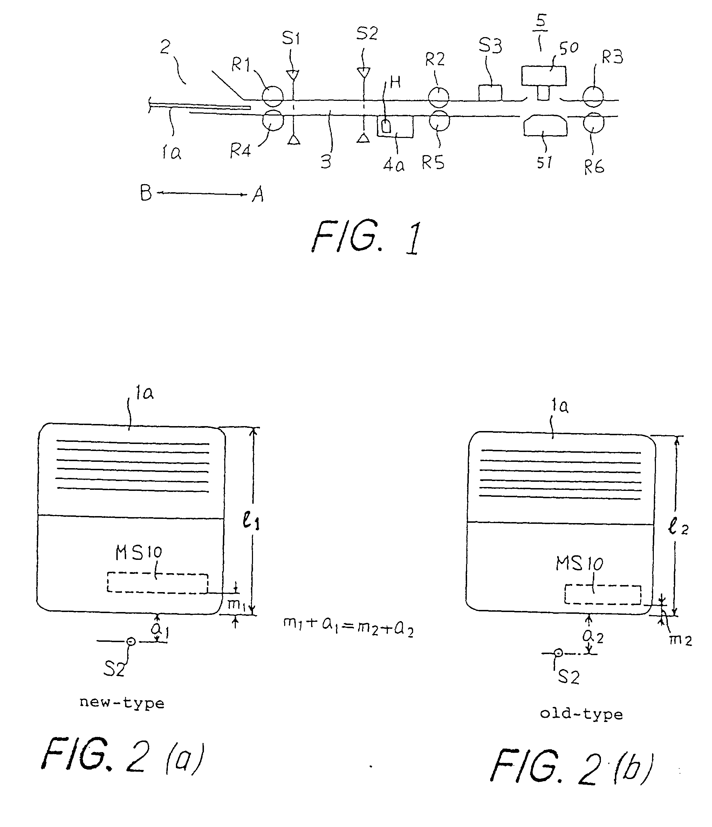

Fig. 1 is a side view of the mechanisms of a passbook printer.

A passbook printer includes an slot 2 into which a passbook 1a is inserted, feed path 3, R/W station 4a with a magnetic head H for reading the MS (See Fig. 2), printer 5 with a print head 50 and platen 51, three pairs of driving rollers R1-R3 (rotated by motor M1) and pinch rollers R4-R6 for feeding passbook 1a, sensor S1 for sensing the edge of inserted passbook 1a, sensor S2 for sensing the passbook length which is used for determining where to stop passbook 1a, and sensor S3 for reading a page mark and for sensing printed lines.

Figs. 2 (a) and (b) each show new and old-type passbooks used in a banking facility, with pages to be printed opened and the direction of insertion upside. The passbooks differ in size (length L1,L2) and MS position (m1,m2).

Fig. 3 is a functional block diagram of a passbook printer of a related art.

In addition to the mechanical parts shown in Fig. 1, a passbook printer includes a feed controller 6a, carrier 7 for moving magnetic head H on the MS, amplifier 8 for sensors S1-S3, position data memory 9a for storing the passbook length (ℓ₁, ℓ₂) and MS position (distance a1, a2 between sensor S2 and the edge of passbook 1a) for the new and old-type passbooks (See Fig. 2), main controller 11a, ADC 42 for analog-to-digital convertering an MS signalfrom magnetic head H, and drivers D1 and D2 for driving motors M1 and M2. The magnetic head H and sensor S3 are arranged at different distances within the passbook printer according to the kind of passbooks or the banking facilities.

With a passbook printer so constructed, an ATM processes a transaction (e.g., Deposit) as follows:

When the "Deposit Mode" key on the keyboard (not shown) is pressed and passbook 1a is inserted into slot 2 (in the direction of arrow A shown in Fig. 1), the edge of passbook 1a is sensed by sensor S1 and passbook 1a starts to be fed with a side of feed path 3 as a guide.

Passbook 1a is fed to R/W station 4a and stops in place as follows: While passbook 1a is being fed, sensor S2 senses passbook length (e.g., ℓ₁), main controller 11a reads MS position data a1 for length ℓ₁ from position data memory 9a and controls feed controller 6a so that passbook 1a stops with its bottom edge part sensor S2 by al.

There, magnetic head H reads such data as the customer's account number and balance from MS 10 while moving lengthwise from the edge of MS 10. If the MS reading fails with "data error" or "data missing" status presented, the reading operation is retried for the pre-specified number of times. Nevertheless, if the retrials are unsuccessful, passbook 1a is ejected. When MS reading succeeds, passbook 1a is fed farther to set the print line under the print head (not shown) of printer 5. The print line is set next to the printed lines which are sensed by sensor S3.

When bank notes are put in to be deposited, the ATM counts them and displays the amount. When the customer presses the "Confirm" key (not shown) for the displayed amount, the ATM sends the MS data (read by R/W station 4a) and the transaction mode (deposit in this case) data to a central computer (not shown). In return, the ATM receives transaction data such as the balance. Printer 5 prints the received transaction data in passbook 1a. On completion of printing, passbook 1a is fed (in the direction of arrow B shown in Fig. 1) to R/W station 4a, where magnetic head H writes the resulting balance in the MS while moving in the reverse direction in respect to MS reading. Finally, passbook 1a is ejected to slot 2.

Banking facilities have their own passbooks of different kinds. For passbooks of different lengths, the conventional method can position the MS right under magnetic head H by adjusting the stop position of passbooks based on their length. However, a problem is that the conventional method cannot locate the MS position for the passbooks fo the same size or deal with the passbooks of other banking facilities. Another problem sis that it takes time before the MS is located because MS reading is retried for the pre-specified number of times until MS is successfully read.

Finally, there is known from patent document US-A-4 082 943 a system for reading printed information, such as a code, on a carrier. The system is equipped with means for determining when an unsuccessful scan has resulted and thereafter commanding a re-scan of the code until a successful scan is obtained or until a predetermined number of unsuccessful scans has been completed. In one embodiment of the system, means are provided for modifying the position of the relative position of the scanning means with respect to the carrier during successive scans.

### SUMMARY OF THE INVENTION

An object of the present invention is to provide a magnetic stripe reading apparatus that can handle a plurality kinds of passbooks with a magnetic stripe attached at different positions.

Another object of the present invention is to provide a magnetic stripe reading apparatus that can read the magnetic stripes of passbooks of different kinds effectively by locating the magnetic stripe quickly.

To achieve the above and other objects, the present invention provides a priority table, a position data memory, a main controller and a sequence controller.

The magnetic stripe reading apparatus comprises a positioning means for positioning a passbook in place on the basis of given position data and reading means for reading a magnetic stripe attached on said passbook and for providing an error signal when data is not read correctly, said magnetic stripe reading apparatus comprising : priority setting means for setting priorities for a plurality of said passbooks; memory means for storing said position data for each of said passbooks on the basis of which said positioning means positions said passbooks; read control means for performing a read control operation to read said position data from said memory means according to the priorities set in said priority setting means, to activate said positioning means on the basis of the read position data and then to activate said reading means; and sequence control means responsive to said error signal for directing said read control means to perform said read control operations one by one according to the priorities set by said priority setting means for said position data, until data is read correctly.

The invention also concerns a magnetic stripe reading apparatus comprising:
- a positioning means for positioning a passbook in place based on given position data;
- reading means for reading a magnetic stripe (MS) attached on said passbook and for providing an error signal when data is not read correctly;
- priority means for setting priorities for a plurality of said passbooks;
- memory means for storing said position data for the kind of said passbooks based on which said positioning means positions said passbooks;
- a main controller for reading out said position data from said memory means according to the priorities set in said priority setting means;
- feed control means for controlling said positioning means based on the position data read out by said main controller ;
- said main controller commanding said feed control means and said reading means;
- sequence control means responsive to said error signal, for directing said main controller, to command said feed control means and said reading means in order to perform magnetic stripe reading operations one by one according to the priorities set by said priority setting means for said position data until data is read correctly.

### BRIEF DESCRIPTION OF THE DRAWINGS

Fig. 1 is a side view of the mechanisms of a passbook printer.
Figs. 2 (a) and (b) each show new and old-type passbooks used in a banking facility.

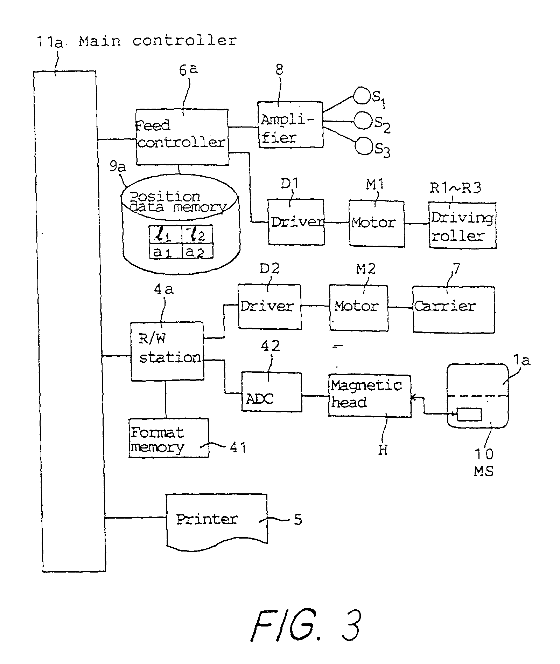

Fig. 3 is a functional block diagram of a passbook printer of a related art.

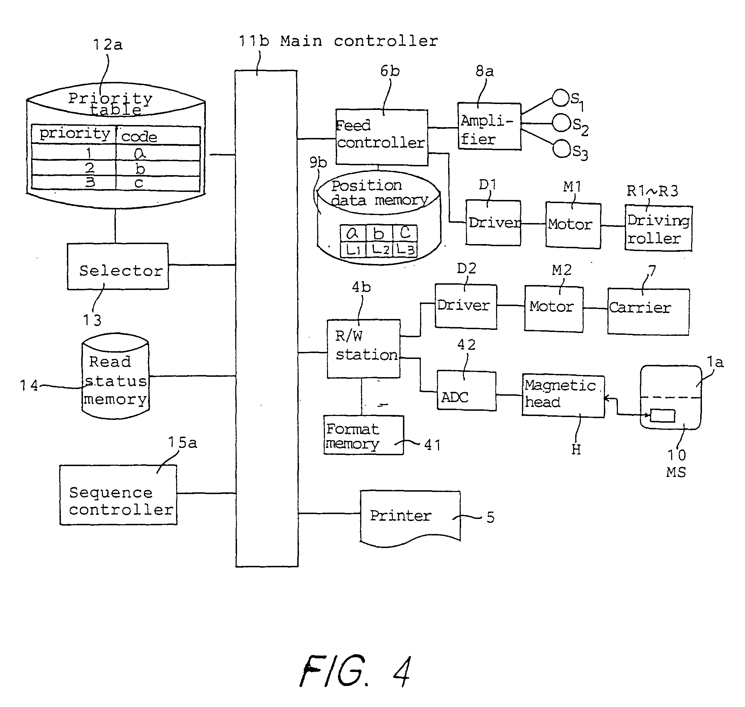

Fig. 4 is a functional block diagram of an ATM embodying the present invention.

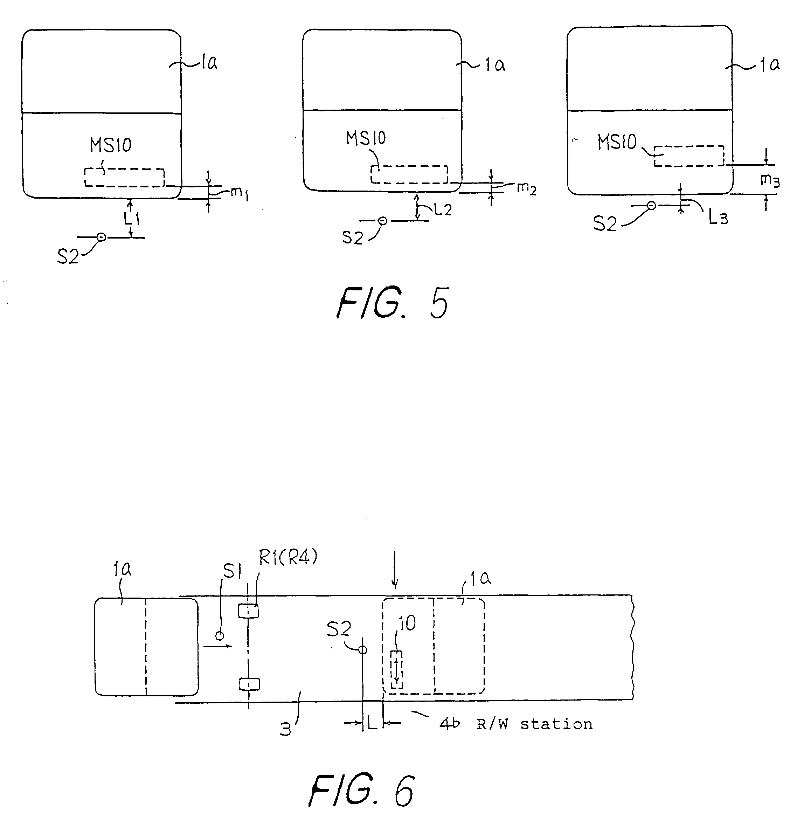

Fig. 5 illustrates the MS read position in respect to MS positions embodying the present invention.
Fig. 6 is a top plan view of the mechanisms of a passbook printer.

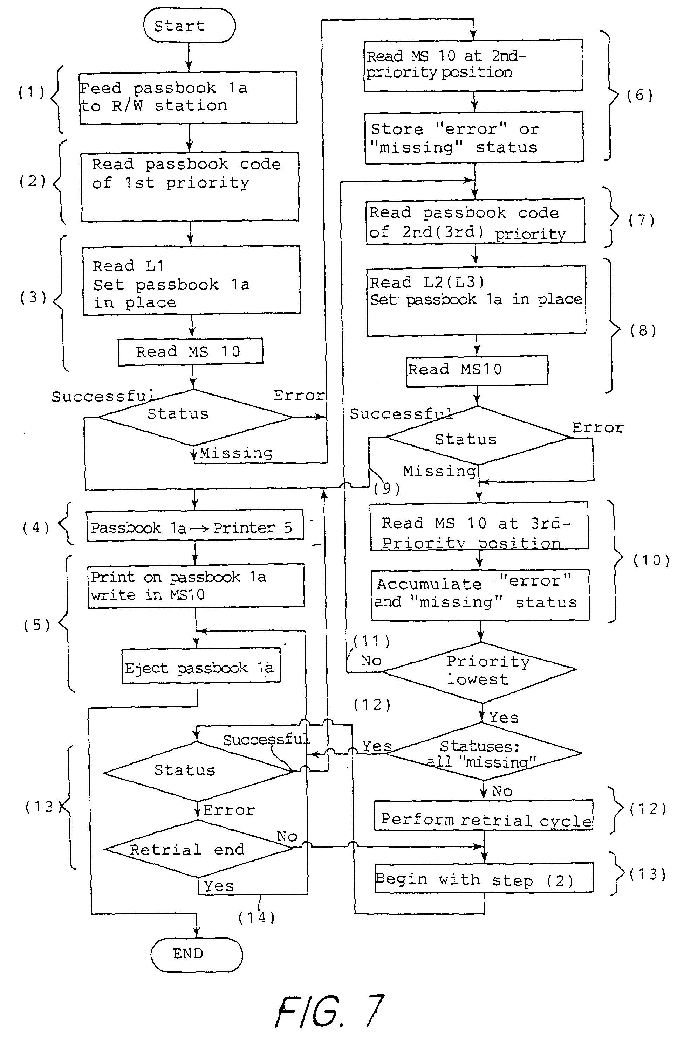

Fig. 7 is a flowchart illustrating the MS read operation.

Throughout the above-mentioned drawings, identical reference numerals are used to designate the same or similar component parts.

### DESCRIPTION OF THE PREFERRED EMBODIMENTS

Fig. 4 is a functional block diagram of an ATM embodying the present invention.

Position data memory 9b previously stores MS position data, i.e., the distances L1-L3, for example, between the edge of passbook 1a and sensor S2 for passbook codes a-c indicating the kinds of passbook 1a dealt by the ATM. L1-L3 are determined so that the distances between MS 10 and sensor S2 are equal for all the passbooks 1a whose distances m1-m3 from the edge of passbooks 1a are different from each other (L1+m1 =L2+m2 =L3+m3, see Fig. 5).

Priority table 12a stores the priorities set for passbook codes a-c. For example, the first priority is given to the passbook (code a) of the banking facility concerned, and the second and successive priorities are to those (codes c and b) of the affiliated facilities in accordance with the frequency of transaction.

Selector 13 reads the passbook codes by one from priority table 12a according to the priorities set therein (i.e., in the order of a, b, c).

Main controller 11b reads the MS position data (L1-L3) based on the passbook code read by selector 13, controls feed controller 6b so that passbook 1a stops in place and commands R/W station 4b to read MS 10.

Feed controller 6b captures an inserted passbook 1a, moves the passbook 1a to R/W station 4b, sets it in place using L1-L3, feeds it to printer 5 and ejects it out by rotating motor M1 and driving rollers R1-R3 via driver D1 .

R/W station 4b, which includes magnetic head H, carrier 7 and format table 41, writes/reads transaction data to/from MS 10 with magnetic head H moving perpendicularly to the direction in which passbook 1a moves i.e., lengthwise on MS 10. Magnetic head H is moved by carrier 7 which is driven by motor M2. MS reading and writing is carried out in accordance with the data format stored in format table 41. Since data formats are usually different depending on respective banking facilities, the data formats are stored in the format table 41 corresponding to the codes indicating the kinds of passbooks 1a. R/W station 4b also performs vertical redundancy check (VRC), longitudinal redundancy check (LRC) and format checks on the read data, classifies the checked results as "read successful", "data error" and "data missing", and stores the "data error" and "data missing" statuses in read status memory 14 until data reading results in "read successful".

Sequence controller 15a performs the following: (1) When the above check result is "read successful", sequence controller 15a commands feed controller 6b to feed passbook 1a to printer 5, (2) when the check result is "data error" or "data missing", it commands main controller 11b to read MS 10 set at the MS position of the next higher priority by reference to priority table 12a, and (3) when the MS reading fails as "data error" or "data missing" for all the above-mentioned distances L1-L3, it commands main controller 11b to retry another cycle of MS reading for the distances L1-L3 for the pre-specified number of times.

Fig. 6 is a top plan view of the mechanisms of a passbook printer.

Sensor S2 for sensing the rear edge of passbook 1a, is provided before R/W station 4b, i.e., on the left side of R/W station 4b in the figure. Carrier 7 moves MS 10 bidirectionally along the arrow.

Fig. 7 is a flowchart illustrating the MS read operation.
(1) When sensor S1 senses passbook 1a inserted from slot 2, feed controller 6b rotates driving rollers R1-R3 to feed passbook 1a to R/W station 4b.
(2) Meanwhile, selector 13, under control of main controller 11b, reads the passbook code of the first priority from priority table 12a.
(3) Main controller 11b reads position data L1 on the basis of passbook code a, feed controller 6b stops passbook 1a at the position designated by L1, and carrier 7 moves magnetic head H on MS 10 to perform MS reading.
(4) When MS reading results in "read successful" (i.e., passbook 1a should be that of the banking facility concerned in this case), feed controller 6b feeds passbook 1a to printer 5, as commanded by sequence controller 15a.
(5) A communication with the center computer is established at that point. The transaction data from the center computer is printed on passbook 1a. Then, under control of feed controller 6b, passbook 1a moves to R/W station 4b and stops in place, where such data as the balance is written in MS 10. Finally, passbook 1a is ejected to entrance 2.
(6). When MS reading results in "data error" (i.e., passbook 1a may be that of the banking facility concerned or other facilities) or "data missing" (i.e., passbook 1a should be that of other facilities), sequence controller 15a commands main controller 11b both to read MS 10 at the MS position of the second priority by reference to priority table 12a and to store the "data error" or "data missing" status in read status memory 14.
(7) Selector 13 reads a passbook code of the second priority from priority table 12a.
(8) Main controller 11b reads position data L2 based on the passbook code b, feed controller 6b stops passbook 1a at the position designated by L2, and carrier 7 moves magnetic head H on MS 10 to perform MS-reading.
(9) When MS reading results in "read successful", feed controller 6b feeds passbook 1a to printer 5, as commanded by sequence controller 15a.
(10) When MS reading results in "data error" or "data missing", sequence controller 15a commands main controller 11b to read MS 10 at the MS position of the third priority by reference to priority table 12a and to accumulate "data error" or "data missing" status in read status memory 14.
(11) The same processing as in steps (7) to (10) is repeated for the MS position of the fourth and the subsequent priority.
(12) When the statuses stored in read status memory 14 are all "data missing", feed controller 6b ejects passbook 1a to slot 2.
(13) When a "data error" status exists in read status memory 14, sequence controller 15a commands main controller 11b to perform a retrial cycle of MS reading. That is, step (2) and subsequent steps are repeated for the pre-specified number of times. When "read successful" is presented during the time, step (4) and subsequent steps are executed.
(14) When the retrial cycle is repeated for the pre-specified number of times without "read successful" presented, passbook 1a is ejected to slot 2.

Thus, by initially giving priorities to a plurality of passbooks whose MS positions differ from each other and by reading the MS while moving the passbooks by the distance designated for the priorities, the MSs of different banking facilities can be read successfully. This allows to identify the banking facility on the basis of MS data and, therefore, allows the ATM to deal with the passbooks of different banking facilities.

Furthermore, when only "data missing" is presented for the first cycle of MS reading, the reading operation is terminated without performing extra MS reading and passbook 1a is ejected. This saves an extra time required in the conventional method.

The present invention also applies to a case in which a banking facility has two (old and new) types of passbooks with MSs attached at different positions.

## Claims

1. A magnetic stripe reading apparatus comprising:
- a positioning means (R1-R6) for positioning a passbook (1a) in place based on given position data;
- reading means (4b) for reading a magnetic stripe (MS) attached on said passbook and for providing an error signal when data is not read correctly;
- priority setting means (12a) for setting priorities for a plurality of said passbooks;
- memory means (9b) for storing said position data for each of said passbooks on the basis of which said positioning means positions said passbooks;
- read control means (11b,6b) for performing a read control operation
- to read said position data from said memory means (9b) according to the priorities set in said priority setting means,
- to activate said positioning means on the basis of the read position data and then
- to activate said reading means; and
- sequence control means (15a) responsive to said error signal for directing said read control means to perform said read control operations one by one, according to the priorities set by said priority setting means (12a) for said position data, until data is read correctly.

2. A magnetic stripe reading apparatus according to claim 1, wherein said sequence control means (15a) includes a means for directing said read control means to retry a cycle of said read control operations for all said position data stored in said memory means for a pre-designated number of times, when magnetic stripe data has not been read correctly for all said positive data.

3. A magnetic stripe reading apparatus according to claim 2, wherein said reading means (4b) includes a means for providing a data missing signal when data signal is not detected while reading said magnetic stripe (Ms), and wherein said sequence control means (15a) includes a means for preventing said read control means from retrying another cycle of said read control operations when said data missing signal is provided for all said position data in said cycle currently being retried.

4. A magnetic stripe reading apparatus comprising:
- a positioning means (R1-R6) for positioning a passbook (1a) in place based on given position data;
- reading means (4b) for reading a magnetic stripe (MS) attached on said passbook and for providing an error signal when data is not read correctly;
- priority setting means (12a) for setting priorities for a plurality of said passbooks;
- memory means (9b) for storing said position data for the kind of said passbooks based on which said positioning means positions said passbooks;
- a main controller (11b) for reading out said position data from said memory means (9b) according to the priorities set in said priority setting means;
- feed control means (6b) for controlling said positioning means based on the position data read out by said main controller;
- said main controller (11b) commanding said feed control means and said reading means;
- sequence control means (15a) responsive to said error signal, for directing said main controller (11b), to command said feed control means (6b) and said reading means (4b) in order to perform magnetic stripe reading operations one by one according to the priorities set by said priority setting means (12a) for said position data until data is read correctly.

5. A magnetic stripe reading apparatus according to claim 4, further comprising :
judging means (4b) for judging whether the magnetic stripe data read by said reading means is correct or not.

6. A magnetic stripe reading apparatus according to claim 5, wherein said main controller (11b) includes a means for reading out the next position data from said memory means when said judging means (4b) has judged the data to be incorrect, and for providing said next position data to said feed control means (6b).

## Patentansprüche

1. Magnetstreifenlesevorrichtung mit:
- einem Positioniermittel (R1-R6) zum Positionieren eines Bankbuchs (1a) an der korrekten Stelle auf der Basis von gegebenen Positionsdaten;
- einem Lesemittel (4b) zum Lesen eines Magnetstreifens (MS), der auf dem Bankbuch angeordnet ist, und zum Vorsehen eines Fehlersignals, wenn Daten nicht korrekt gelesen werden;
- einem Prioritätseinstellmittel (12a) zum Einstellen von Prioritäten für eine Vielzahl der Bankbücher;
- einem Speichermittel (9b) zum Speichern der Positionsdaten für jedes der Bankbücher, auf deren Basis das Positioniermittel die Bankbücher positioniert;
- einem Lesesteuermittel (11b, 6b) zum Ausführen einer Lesesteueroperation,
- um die Positionsdaten aus dem Speichermittel (9b) zu lesen, gemäß den Prioritäten, die in dem Prioritätseinstellmittel eingestellt sind,
- um das Positioniermittel auf der Basis der gelesenen Positionsdaten zu aktivieren und dann
- das Lesemittel zu aktivieren; und
- einem Folgesteuermittel (15a), das auf das Fehlersignal reagiert, zum Anweisen des Lesesteuermittels, um die Lesesteueroperationen eine nach der anderen auszuführen, gemäß den Prioritäten, die durch das Prioritätseinstellmittel (12a) für die Positionsdaten eingestellt sind, bis Daten korrekt gelesen werden.

2. Magnetstreifenlesevorrichtung nach Anspruch 1, bei der das Folgesteuermittel (15a) ein Mittel zum Anweisen des Lesesteuermittels enthält, um einen Zyklus der Lesesteueroperationen für all die Positionsdaten, die in dem Speichermittel gespeichert sind, vorbestimmte Male zu wiederholen, wenn Magnetstreifendaten bei all den Positionsdaten nicht korrekt gelesen worden sind.

3. Magnetstreifenlesevorrichtung nach Anspruch 2, bei der das Lesemittel (4b) ein Mittel zum Vorsehen eines Signals "Fehlende Daten" enthält, wenn kein Datensignal detektiert wird, während der Magnetstreifen (MS) gelesen wird, und bei der das Folgesteuermittel (15a) ein Mittel zum Verhindern dessen enthält, daß das Lesesteuermittel einen anderen Zyklus der Lesesteueroperationen wiederholt, wenn das Signal "Fehlende Daten" bei all den Positionsdaten in dem Zyklus, der gerade wiederholt wird, vorgesehen wird.

4. Magnetstreifenlesevorrichtung mit:
- einem Positioniermittel (R1-R6) zum Positionieren eines Bankbuchs (1a) an der korrekten Stelle auf der Basis von gegebenen Positionsdaten;
- einem Lesemittel (4b) zum Lesen eines Magnetstreifens (MS), der auf dem Bankbuch angeordnet ist, und zum Vorsehen eines Fehlersignals, wenn Daten nicht korrekt gelesen werden;
- einem Prioritätseinstellmittel (12a) zum Einstellen von Prioritäten für eine Vielzahl der Bankbücher;
- einem Speichermittel (9b) zum Speichern der Positionsdaten für die Art der Bankbücher, auf deren Basis das Positioniermittel die Bankbücher positioniert;
- einem Hauptcontroller (11b) zum Auslesen der Positionsdaten aus dem Speichermittel (9b) gemäß den Prioritäten, die in dem Prioritätseinstellmittel eingestellt sind;
- einem Zufuhrsteuermittel (6b) zum Steuern des Positioniermittels auf der Basis der Positionsdaten, die durch den Hauptcontroller ausgelesen wurden;
- welcher Hauptcontroller (llb) das Zufuhrsteuermittel und das Lesemittel instruiert;
- einem Folgesteuermittel (15a), das auf das Fehlersignal reagiert, zum Anweisen des Hauptcontrollers (11b), um das Zufuhrsteuermittel (6b) und das Lesemittel (4b) zu instruieren, um Magnetstreifenleseoperationen eine nach der anderen auszuführen, gemäß den Prioritäten, die durch das Prioritätseinstellmittel (12a) für die Positionsdaten eingestellt sind, bis Daten korrekt gelesen werden.

5. Magnetstreifenlesevorrichtung nach Anspruch 4, ferner mit:
einem Beurteilungsmittel (4b) zum Beurteilen dessen, ob die Magnetstreifendaten, die durch das Lesemittel gelesen wurden, korrekt sind oder nicht.

6. Magnetstreifenlesevorrichtung nach Anspruch 5, bei der der Hauptcontroller (11b) ein Mittel enthält zum Auslesen der nächsten Positionsdaten aus dem Speichermittel, wenn das Beurteilungsmittel (4b) beurteilt hat, daß die Daten inkorrekt sind, und zum Vorsehen der nächsten Positionsdaten für das Zufuhrsteuermittel (6b).

## Revendications

1. Appareil de lecture de feuillet magnétique, comprenant :
- un moyen de positionnement (R1-R6) servant à positionner un livret de banque (1a) en place sur la base de données de position données ;
- un moyen de lecture (4b) servant à lire un feuillet magnétique (MS) fixé sur ledit livret de banque et à fournir un signal d'erreur lorsque des données ne sont pas lues correctement ;
- un moyen (12a) de fixation de priorité servant à fixer des priorités pour une pluralité desdits livrets de banque ;
- un moyen de mémorisation (9b) servant à stocker lesdites données de position pour chacun desdits livrets de banque, sur la base desquelles ledit moyen de positionnement positionne lesdits livrets de banque ;
- un moyen (11b, 6b) de commande de lecture servant à effectuer une opération de commande de lecture
- afin de lire lesdites données de position dans ledit moyen de mémorisation (9b) en fonction des priorités fixées dans ledit moyen de fixation de priorités,
- afin d'activer ledit moyen de positionnement sur la base des données de position de lecture et, ensuite,
- afin d'activer ledit moyen de lecture ; et
- un moyen (15a) de commande de séquence qui répond audit signal d'erreur de manière à diriger ledit moyen de commande de lecture afin d'effectuer lesdites opérations de commande de lecture l'une après l'autre, en fonction des priorités fixées par ledit moyen (12a) de fixation de priorités relativement auxdites données de position, jusqu'à ce que les données soient lues correctement.

2. Appareil de lecture de feuillet magnétique selon la revendication 1, où ledit moyen (15a) de commande de séquence comporte un moyen servant à amener ledit moyen de commande de lecture à rééssayer un cycle desdites opérations de commande de lecture pour toutes lesdites données de position stockées dans ledit moyen de mémorisation un nombre prédésigné de fois, lorsque les données de feuillet magnétique n'ont pas été lues correctement pour toutes lesdites données de position.

3. Appareil de lecture de feuillet magnétique selon la revendication 2, où ledit moyen de lecture (4b) comporte un moyen servant à fournir un signal de manque de données lorsqu'un signal de données n'est pas détecté pendant la lecture dudit feuillet magnétique (MS), et où ledit moyen (15a) de commande de séquence comporte un moyen servant à empêcher ledit moyen de commande de lecture de rééssayer un autre cycle desdites opérations de commande de lecture lorsque ledit signal de manque de données est fourni pour toutes lesdites données de position dans ledit cycle qui fait présentement l'objet d'un nouvel essai.

4. Appareil de lecture de feuillet magnétique, comprenant :
- un moyen de positionnement (R1-R6) servant à positionner un livret de banque (1a) en place sur la base de données de position données ;
- un moyen de lecture (4b) servant à lire un feuillet magnétique (MS) fixé sur ledit livret de banque et à fournir un signal d'erreur lorsque des données ne sont pas lues correctement ;
- un moyen (12a) de fixation de priorité servant à fixer des priorités pour une pluralité desdits livrets de banque ;
- un moyen de mémorisation (9b) servant à stocker lesdites données de position pour le type desdits livrets de banque sur la base duquel ledit moyen de positionnement positionne lesdits livrets de banque ;
- un dispositif de commande principal (11b) servant à lire lesdites données de position dans ledit moyen de mémorisation (2b) en fonction des priorités fixées dans ledit moyen de fixation de priorités ;
- un moyen de commande d'avance (6b) servant à commander ledit moyen de positionnement sur la base des données de position lues par ledit dispositif de commande principal ;
- ledit dispositif de commande principal (11b) commandant ledit moyen de commande d'avance et ledit moyen de lecture ;
- un moyen (15a) de commande de séquence qui répond audit signal d'erreur, de manière à diriger ledit moyen de commande principal (11b) afin de commander ledit moyen de commande d'avance (6b) et ledit moyen de lecture (4b) pour effectuer des opérations de lecture de feuillet magnétique l'une après l'autre en fonction des priorités fixées par ledit moyen de fixation de priorité (12a) pour lesdites données de position jusqu'à ce que les données aient été lues correctement.

5. Appareil de lecture de feuillet magnétique selon la revendication 4, comprenant en outre :
- un moyen de décision (4b) servant à décider si les données de feuillet magnétique lues par ledit moyen de lecture sont ou non corrects.

6. Appareil de lecture de feuillet magnétique selon la revendication 5, où ledit dispositif de commande principal (11b) comporte un moyen permettant de lire la données de position suivante dans ledit moyen de mémorisation lorsque ledit moyen de décision (4b) a décidé que les données étaient incorrectes, et de fournir ladite donnée de position suivante audit moyen de commande d'avance (6b).
